# EUROPEAN PATENT SPECIFICATION

(11) **EP 1 264 356 B1**
(45) Date of publication and mention of the grant of the patent: **11.10.2006**
(21) Application number: 01912209.2
(22) Date of filing: 08.03.2001
(51) Int. Cl.: H01M 2/02

(54) **MANGANESE DRY BATTERY**
MANGAN-TROCKENBATTERIE
PILE SECHE A MANGANESE

(30) Priority: 17.03.2000 JP 2000076932; 23.02.2001 JP 2001049442
(43) Date of publication of application: 11.12.2002
(73) Proprietor: MATSUSHITA ELECTRIC INDUSTRIAL CO., LTD., Kadoma-shi, Osaka 571-8501 (JP)
(72) Inventor: ISHIDA, Tsutomu,Room 502, Fujisawa-shi,Kanagawa 251-0046 (JP); OGINO, Keiji, Katano-shi, Osaka 576-0041 (JP)
(74) Representative: TBK-Patent
(86) International application number: PCT/JP2001/001836
(87) International publication number: WO 2001/071828

(56) References cited:
- EP-A- 0 628 598
- EP-A- 0 945 906
- PATENT ABSTRACTS OF JAPAN vol. 011, no. 367 (E-561), 28 November 1987 (1987-11-28) & JP 62 139246 A (HITACHI MAXELL LTD), 22 June 1987 (1987-06-22)
- PATENT ABSTRACTS OF JAPAN vol. 1996, no. 03, 29 March 1996 (1996-03-29) & JP 07 307158 A (HITACHI MAXELL LTD), 21 November 1995 (1995-11-21)

## Description

### Technical Field

The present invention relates to a manganese dry battery with an excellent gas tightness, in particular, to a cylindrical manganese dry battery.

### Background Art

An example of a manganese dry battery in accordance with a prior art (e.g. JP 62139246) is described in reference to FIG. 1, which is a partial cross sectional view of a cylindrical manganese dry battery.

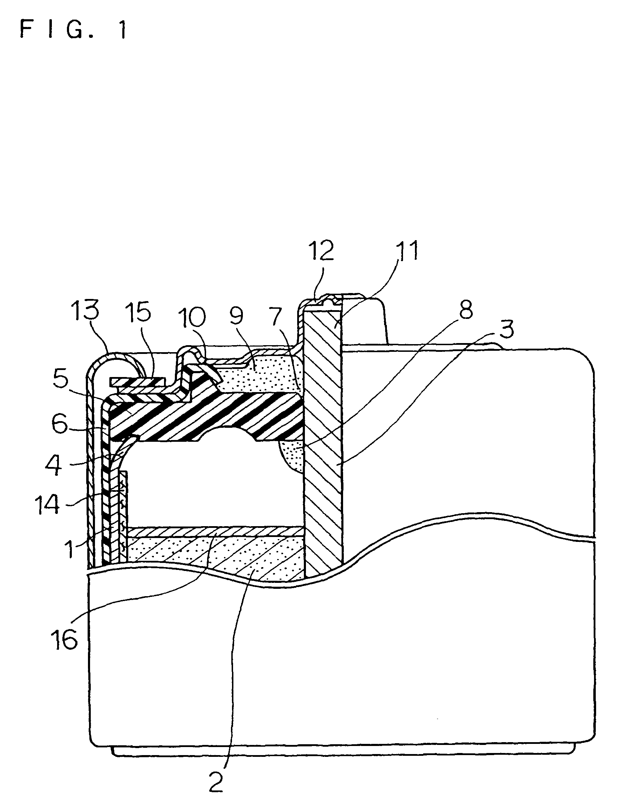

In FIG. 1, a cathode mixture 2 is contained in an anode zinc can 1 via a separator 14. In the center of the cathode mixture 2, a carbon rod 3 is inserted. The opening 4 of the anode zinc can 1 is sealed by a gasket 5. The carbon rod 3 fits with the gasket 5 through the hole in the center thereof The opening end 4 of the anode zinc can fits with the gasket 5 at a groove having a shape corresponding to the opening end 4, or is fixed onto the gasket 5 by pressing it against the gasket 5 and burying it in the gasket. The circumference of the anode zinc can 1 and the outer surface of the gasket 5 are covered with a heat-shrinkable tube 6 up to the middle point between the periphery of the gasket and the carbon rod for securing the insulation. The tube 6 can also serve to fix the gasket 5. Here, the numeral 16 denotes an insulating paper.

A sealant 9 is applied on the outer surface of the gasket 5 in order that the end periphery 10 of the tube 6 is buried therein. Furthermore, the sealant 9 is applied around the hole of the gasket 5, i.e., on the outer surface 7 and inner surface 8 of the gasket 5.

The sealant 9 is applied in the following manner, for example. The carbon rod 3 is inserted into the cathode mixture 2 in the center thereof. Then, a proper amount of sealant 9 is applied to a part of the carbon rod 3 which is to fit with the gasket 5. Next, the opening of the anode zinc can 1 is sealed by the gasket 5 which has the hole by putting the gasket 5 onto the opening, and fitting the carbon rod 3 with the gasket 5 through the hole. As a result, the gap between the carbon rod 3 and the gasket 5 is tightly sealed with the sealant 9. At this time, the sealant 9 gathers to the inner surface 8 of the gasket around the hole. Next, a predetermined portion is wrapped with the tube 6. After that, a proper amount of the sealant 9 is applied to the outer surface of the gasket 5 in order that the end periphery 10 of the tube 6 and the outer surface 7 around the hole are buried in the sealant 9.

A cap 12 covers the gasket 5 and the protruding part 11 of the carbon rod 3, via the sealant 9 and the tube 6. The side of the battery is entirely covered with a metal jacket 13 via the tube 6. Further, the curled edge of the metal jacket 13 is fixed to the outer periphery of the cap 12 via an insulating ring 15.

Conventionally, polyvinyl chloride, that is to say PVC, has been used for the heat-shrinkable tube 6. However, PVC has the problem that it generates hydrogen chloride in incineration. Therefore, in recent years, a heat-shrinkable tube comprising polystyrene has gained attention as a substitute (Japanese Laid-Open Patent No. Hei 6-349501).

However, in the case where a battery having the same structure as that of the prior art is assembled by using a tube comprising polystyrene, a problem arises that the battery performance easily deteriorates. The problem of the deterioration was considered to be based on the difference in sealing property between the tube comprising polystyrene and the one comprising PVC. Therefore, from that point of view, studies have been carried out for improving the battery performance without obtaining a satisfactory result.

Further, asphalt has been conventionally used as the sealant 9. However, asphalt easily becomes hard while preserving the battery and easily becomes cracked. The gas tightness of the battery is lowered even by a slight crack.

### Disclosure of Invention

Under the above circumstances, the relations between the oxygen permeability of the heat-shrinkable tube and the battery performance have been studied. As a result, it has turned out that the cause of the deterioration of the battery performance is that the oxygen permeability of the tube comprising polystyrene is higher than that of PVC. That is to say, when a tube comprising polystyrene is used, comparatively large amount of oxygen permeates through this tube. Then, the oxygen leaks into inside of the anode zinc can from the space between the opening end of the anode zinc can and the gasket, so as to cause the deterioration of the battery.

The present invention is based on the above finding. That is to say, the present invention relates to a manganese dry battery comprising an anode zinc can of a bottomed cylindrical shape, a cathode mixture contained in the anode zinc can, a separator interposed between the anode zinc can and the cathode mixture, a carbon rod inserted in the center of the cathode mixture, a gasket sealing the opening of the anode zinc can and having a hole in the center thereof through which the carbon rod is inserted, and a heat-shrinkable tube covering the circumference of the anode zinc can and the outer periphery of the gasket, wherein the heat-shrinkable tube comprises at least one selected from the group consisting of polystyrene, polypropylene, polyethylene and a copolymer of ethylene and propylene, and a sealant is applied at least between the opening end of the anode zinc can and the gasket. The sealant preferably comprises polybutene.

Here, polyethylene terephthalate, that is to say, PET, is known as a material of which the oxygen permeability is lower than that of PVC. However, PET has a low resistance against the electrolyte of the battery, and easily causes cracks. Further, it is easily decomposed in the presence of acid or alkali. The pH value inside the manganese dry battery varies between 2 to 7 with the battery reaction. When PET contacts with the electrolyte having pH value of 2 to 3 by the liquid leaking due to an excessive discharging, PET is easily decomposed. Accordingly, it is difficult to use PET for a heat-shrinkable tube of a manganese dry battery.

While the novel feature of the invention are set forth particularly in the appended claims, the invention, both as to organization and content, will be better understood and appreciated, along with other objects and features thereof, from the following detailed description taken in conjunction with the drawings.

### Brief Description of Drawings

FIG. 1 is a partial cross sectional view of one example of a cylindrical manganese dry battery in accordance with a prior art; and
FIG. 2 is a partial cross sectional view of one example of a cylindrical manganese dry battery in accordance with the present invention.

### Best Mode for Carrying Out the Invention

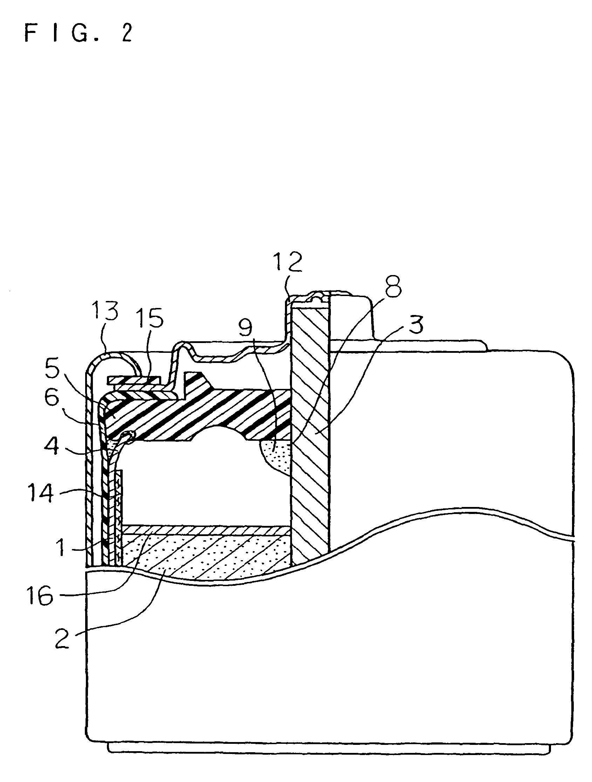

An example of a manganese dry battery in accordance with the present invention is described in reference to FIG. 2 which is a partial cross sectional view of a cylindrical manganese dry battery. In FIG. 2, the descriptions of the same components as in FIG. 1 are omitted.

In a manganese dry battery of FIG. 2, a sealant 9 is applied to the portion between the opening end 4 of the anode zinc can and the gasket 5 and in the vicinity thereof. Further, a sealant 9 is applied to the portion between the carbon rod 3 and the gasket 5, and around the hole of the gasket 5 on the inner surface 8.

The sealant 9 is applied in the following manner, for example. In the same manner as in a prior art, the carbon rod 3 is inserted into the cathode mixture 2 in the center thereof. Then, a proper amount of sealant 9 is applied to a part of the carbon rod 3 which is to fit with the gasket 5. Further, a proper amount of sealant 9 is applied in advance to the opening end 4 of the anode zinc can 1 which is to fit with the gasket 5. Next, the opening of the anode zinc can 1 is sealed by the gasket 5 which has a predetermined hole by putting the gasket 5 onto the opening, and fitting the carbon rod 3 with the gasket 5 through the hole. As a result, the gap between the carbon rod 3 and the gasket 5, and the gap between the opening end of the anode zinc can and gasket 5 are tightly sealed with the sealant 9. At this time, the sealant 9 gathers to the inner surface 8 of the gasket around the hole.

In this case of FIG. 2, oxygen permeates through the tube 6 and passes through the gap between the end portion 10 of the tube 6 and the gasket 5, into the space between the tube 6 and the anode zinc can 1. However, since the sealant 9 is applied to the portion between the opening end 4 of the anode zinc can 1 and the gasket 5 and to the vicinity thereof, oxygen can be prevented from leaking into the inside of the anode zinc can 1.

Further, the manganese dry battery of the present invention does not need any sealing between the end portion 10 of the tube 6 and the gasket 5, unlike in a conventional manganese dry battery. It is also unnecessary to cover, with the tube 6, the outer surface of the gasket 5 up to the middle point between the periphery of the gasket 5 and the carbon rod 3. As shown in FIG. 2, it is sufficient to cover the outer periphery of the gasket 5 with the tube 6.

Here, from the viewpoint of the gas tightness, an additional sealant 9 may be applied on the outer surface 7 around the hole of the gasket 5, or between the end portion 10 of the tube 6 and the gasket 5. The amount of the sealant 9 may be any that can sufficiently secure the gas tightness of the inside of the anode zinc can.

As for the tube material, a resin comprising at least one selected from the group consisting of polystyrene, polypropylene, polyethylene and a copolymer of ethylene and propylene is used from the point of view that a tube having an excellent adherent property and heat-shrinkability that are proper for fixing the gasket 5 can be obtained. Among these, the resin comprising polystyrene and the resin comprising a copolymer of ethylene and propylene are particularly preferable. The resin comprising polystyrene is further preferable since, when the battery is inserted into the tube comprising polystyrene, wrinkles and breaks are not likely to generate on the tube.

The resin comprising polystyrene preferably contains a block copolymer of a styrene type hydrocarbon and a conjugated diene type hydrocarbon. The styrene type hydrocarbon includes, for example, styrene and methylstyrene. These may be used alone or may be used in a combination of two or more. The conjugated diene type hydrocarbon includes, for example, butadiene, isoprene, 1, 3-pentadiene. These may be used alone or may be used in a combination of two or more.

Further, the block copolymer includes, for example, a copolymer of styrene and butadiene. The block copolymer may be blended with polystyrene or a high impact polystyrene.

More specifically, a preferable resin comprising polystyrene is exemplified by a resin composite containing 15 to 25 parts by weight of a block copolymer comprising 20 to 40 wt% of styrene and 60 to 80 wt% of butadiene, 70 to 80 parts by weight of a random copolymer comprising 85 to 95 wt% of styrene and 5 to 15 wt% of butylacrylate and 2 to 10 parts by weight of a high impact polystyrene.

As for the resin comprising a copolymer of ethylene and propylene, a resin containing 100 parts by weight of a copolymer of ethylene and propylene and 2 to 50 parts by weight of petroleum resin is preferable. The petroleum resin includes an aliphatic type petroleum resin, an aromatic type petroleum resin, an alicyclic type petroleum resin and reformed resins thereof by a hydrogenation.

The copolymer of ethylene and propylene preferably contains 0.2 to 10 mol% of ethylene unit.

As for the sealant 9, a sealant comprising polybutene is preferable from the point of view that it is difficult to harden, it has an excellent gas tightness, and the like. As for the sealant comprising polybutene, for example, a blend of polybutene and polyethylene and a blend of polybutene and polyisobutylene are preferable. In these blends, it is preferable to use 5 to 30 parts by weigh of a polymer other than polybutene per 100 parts by weight of polybutene.

The favorable ranges of properties of the sealant comprising polybutene are such as a viscosity of 0.01 to 1 Pas (10 to 1000 cP) at 140°C and a weight average molecular weight of 1000 to 5000.

The anode zinc can, the cathode mixture, the carbon rod, the gasket, the metal jacket, and the like, used in the dry battery of the present invention do not have any particular restrictions. As for these, conventionally used materials can be used.

In the following, based on examples, the manganese dry battery of the present invention is described in further detail. However, the present invention is not limited to these examples.

In the following examples and comparative examples, the followings are used as the sealants and the heat-shrinkable tubes:
sealant X: a sealant comprising 60 wt% of asphalt, and 40 wt% of mineral oil as a plasticizer
sealant Y: a sealant comprising 95 wt% of polybutene, and 5 wt% of petroleum resin as a reforming agent
tube A: a tube comprising 100 parts by weight of a resin containing polystyrene, 5 parts by weight of an additive comprising a rubber and 0.1 to 5 parts by weight of a lubricant
tube B: a tube comprising PVC
tube C: a tube comprising a copolymer of ethylene and propylene.

Here, oxygen permeability of PET, polystyrene (PS), a copolymer (PO) of ethylene and polypropylene, polypropylene (PP), polyethylene (PE) and PVC are shown in Table 1 for reference. The thickness of each sample is 25 µm.

**Table 1**

| Tube material | Oxygen permeability |
|---|---|
| | (cc · mm/m² · day · atm) |
| PET | 3 |
| PS | 120 |
| PO | 70 |
| PP | 50 |
| PE | 95 |
| PVC | 6 |

### Example 1

A manganese dry battery R20 of A size, as shown in FIG. 2, is produced as follows.

A mixture of manganese dioxide, carbon powder and electrolyte including zinc chloride, as a cathode mixture, was charged in an anode zinc can via a separator. An insulating paper was provided on the cathode mixture. A carbon rod was inserted into the cathode mixture in the center thereof. A gasket having a predetermined hole was prepared. Then, a proper amount of sealant X was applied to the carbon rod on the part supposed to fit with inside of the hole of the gasket. Further, a proper amount of sealant X was applied to the opening end of the anode zinc can which was supposed to fit with the gasket. Next, the opening of the anode zinc can was sealed by the gasket by putting the gasket onto the opening, and fitting the carbon rod with the gasket through the hole. As a result, the gap between the carbon rod and the gasket, and the gap between the opening end of the anode zinc can and gasket were tightly sealed with the sealant X. At this time, the sealant X gathered to the inner surface of the gasket around the hole. Here, a groove having a shape corresponding to the opening end of the anode zinc can was provided in advance on the portion of the gasket which was supposed to fit with the opening end of the anode zinc can.

Next, the portion ranging from the outer periphery of the gasket to the side surface of the anode zinc can was covered with the tube A. Then, the tube A was made to closely fit with the anode zinc can by heating it at approximately 180°C to fix the gasket. After that, the outer surface of the gasket together with the protruding part of the carbon rod was covered with a cap. An insulating ring was arranged on the periphery of the cap. Then, the side surface of the battery wrapped with the tube A was covered with a metal jacket so that the curled edge of the metal jacket was fixed to the outer periphery of the cap via the insulating ring.

50 articles of the same dry batteries were produced and the open circuit voltages, at the initial time and after one month of preservation at 45°C, were measured for each battery. The average value of the voltages, the σ value as the standard deviation thereof and the R value as the difference between the minimum value and the maximum value thereof were found.

The results are shown in Tables 2 and 3.

**Table 2**

| Time point | Initial | | | | | | |
|---|---|---|---|---|---|---|---|
| Example No. | 1 | 2 | 3 | 4 | Comparative Example No. | | |
| | | | | | 1 | 2 | 3 |
| Va (v) | 1.604 | 1.604 | 1.604 | 1.604 | 1.604 | 1.604 | 1.604 |
| σ | 0.001 | 0.001 | 0.001 | 0.001 | 0.001 | 0.001 | 0.001 |
| R | 0.003 | 0.003 | 0.003 | 0.002 | 0.001 | 0.003 | 0.003 |

| | | | | | | | |
|---|---|---|---|---|---|---|---|
| Va: mean value of open circuit voltages | | | | | | | |

**Table 3**

| Time point | After one month of the preservation at 45°C | | | | | | |
|---|---|---|---|---|---|---|---|
| Example No. | 1 | 2 | 3 | 4 | Comparative Example No. | | |
| | | | | | 1 | 2 | 3 |
| Va (V) | 1.591 | 1.590 | 1.591 | 1.591 | 1.583 | 1.580 | 1.583 |
| σ | 0.002 | 0.001 | 0.002 | 0.001 | 0.003 | 0.004 | 0.004 |
| R | 0.008 | 0.004 | 0.008 | 0.002 | 0.009 | 0.016 | 0.016 |

| | | | | | | | |
|---|---|---|---|---|---|---|---|
| Va: mean value of open circuit voltages | | | | | | | |

### Example 2

The same number of dry batteries were produced in accordance with the same procedure as in Example 1 except for the usage of the sealant Y in place of the sealant X, and the average value of the voltages, the σ value thereof and the R value thereof were found in the same procedure.

The results are shown in Tables 2 and 3.

### Example 3

The same number of dry batteries were produced in accordance with the same procedure as in Example 1 except for the usage of the tube C in place of the tube A. Then, the average value of the voltages, the σ value thereof and the R value thereof were found in the same procedure.

The results are shown in Tables 2 and 3.

### Example 4

The same number of dry batteries were produced in accordance with the same procedure as in Example 2 except for the usage of the tube C in place of the tube A. Then, the average value of the voltages, the σ value thereof and the R value thereof were found in the same procedure.

The results are shown in Tables 2 and 3.

### Comparative Example 1

The same number of dry batteries were produced in accordance with almost the same procedure as in Example 1. Here, the tube B was used in place of the tube A. Further, not only the outer periphery of the gasket, but also the portion closer to the center thereof was covered with the tube B. Further, the sealant X was applied on the outer surface of the gasket up to around the hole in order that the end periphery of the tube B was buried therein. On the other hand, the opening end of the anode zinc can was joined with the gasket without applying any of the sealant X thereto.

Then, in the same procedure, the average value of the voltages, the σ value thereof and the R value thereof were found.

The results are shown in Tables 2 and 3.

### Comparative Example 2

The same number of dry batteries were produced in accordance with the same procedure as in Comparative Example 1 except for the usage of the tube A in place of the tube B. Then, the average value of the voltages, the σ value thereof and the R value thereof were found in the same procedure.

The results are shown in Tables 2 and 3.

### Comparative Example 3

The same number of dry batteries were produced in accordance with the same procedure as in Comparative Example 1 except for the usage of the tube C in place of the tube B. Then, the average value of the voltages, the σ value thereof and the R value thereof were found in the same procedure.

The results are shown in Tables 2 and 3.

From the results of Tables 2 and 3, it can be seen that the batteries of the examples have a smaller unevenness of the open circuit voltage after preservation than that of the comparative examples. It is considered that this is because the batteries of the examples resist the influence of oxygen.

### Industrial Applicability

In accordance with the present invention, a manganese dry battery which is stable and has an excellent gas tightness can be obtained without being affected by types of heat-shrinkable tubes. Accordingly, in the case where a resin of which oxygen permeability is high in comparison with PVC is used for the tube, a manganese dry battery which has an excellent gas tightness can be obtained.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure.

## Claims

1. A manganese dry battery comprising an anode zinc can (1) of a bottomed cylindrical shape, a cathode mixture (2) contained in said anode zinc can (1), a separator interposed between said anode zinc can (1) and said cathode mixture (2), a carbon rod (3) inserted in the center of said cathode mixture (2), a gasket (5) sealing the opening (4) of said anode zinc can (1) and having a hole in the center thereof through which said carbon rod (3) is inserted, and a heat-shrinkable tube (6) covering the circumference of said anode zinc can (1) and the outer periphery of said gasket (5),
wherein said heat-shrinkable tube (6) comprises at least one selected from the group consisting of polystyrene, polypropylene, polyethylene, and a copolymer of ethylene and propylene, and
a sealant (9) is applied at least between the opening end (4) of said anode zinc can (1) and said gasket (5).

2. A manganese dry battery in accordance with claim 1, wherein said sealant (9) comprises polybutene.

## Patentansprüche

1. Mangan-Trockenbatterie, welche einen Anoden-Zinkbecher (1) in einer mit Boden geschlossenen zylindrischen Form, eine Kathodenmischung (2), welche in dem Anoden-Zinkbecher enthalten ist, einen Separator, welcher zwischen die Anoden-Zinkbecher (1) und die Kathodenmischung (2) zwischengelegt ist, ein Kohlenstoffstab (3), welcher in die Mitte der Kathodenmischung (2) eingesetzt ist, ein Dichtring (5), welcher die Öffnung (4) des Anoden-Zinkbechers (1) verschließt und ein Loch in seiner Mitte aufweist, durch welches der Kohlenstoffstab (3) eingesetzt wird, und einen durch Wärme schrumpfenden Schlauch (6), welcher den Umfang des Anoden-Zinkbechers (1) und den äußeren Umfang des Dichtrings (5) bedeckt, umfasst,
wobei der durch Wärme schrumpfende Schlauch (6) mindestens eine Verbindung umfasst, die aus der Gruppe ausgewählt wurde, die aus Polystyren, Polypropylen, Polyethylen und einem Copolymer von Ethylen und Propylen besteht, und
ein Dichtmittel (9) mindestens zwischen dem Öffnungsende (4) des Anoden-Zinkbechers (1) und dem Dichtring (5) aufgetragen wird.

2. Die Mangan-Trockenbatterie nach Anspruch 1, wobei das Dichtmittel (9) Polybuten umfasst.

## Revendications

1. Pile sèche au manganèse comprenant un boîtier en zinc d'anode (1) dont le fond a une forme cylindrique, un mélange de cathode (2) contenu dans ledit boîtier en zinc d'anode (1), un séparateur inséré entre ledit boîtier en zinc d'anode (1) et ledit mélange de cathode (2), une tige de carbone (3) insérée au centre dudit mélange de cathode (2), un joint (5) fermant hermétiquement l'ouverture (4) dudit boîtier en zinc d'anode (1) et ayant un trou au centre de celui-ci à travers lequel ladite tige de carbone (3) est insérée, et un tuyau susceptible de rétrécir à la chaleur (6) recouvrant la circonférence dudit boîtier en zinc d'anode (1) et la périphérie extérieure dudit joint (5),
dans laquelle ledit tuyau susceptible de rétrécir à la chaleur (6) comprend au moins un élément choisi dans le groupe constitué par le polystyrène, le polypropylène, le polyéthylène et un copolymère d'éthylène et de propylène, et
un agent d'étanchéité (9) est appliqué au moins entre l'extrémité d'ouverture (4) dudit boîtier en zinc d'anode (1) et ledit joint (5).

2. Pile sèche au manganèse selon la revendication 1, dans lequel ledit agent d'étanchéité (9) comprend du polybutène.
